# EUROPÄISCHE PATENTSCHRIFT

(11) **EP 4 045 599 B1**
(45) Veröffentlichungstag und Bekanntmachung des Hinweises auf die Patenterteilung: **03.12.2025**
(21) Anmeldenummer: 20781549.9
(22) Anmeldetag: 05.10.2020
(51) Int. Cl.: C08L 91/06

(54) **HELLE REISKLEIEWACHSOXIDATE MIT EINEM HOHEN ESTERANTEIL**
LIGHT RICE BRAN WAX OXIDATES WITH A HIGH ESTER CONTENT
PRODUITS D'OXYDATION DE CIRE DE SON DE RIZ CLAIRS PRÉSENTANT UNE PROPORTION ÉLEVÉE D'ESTER

(30) Priorität: 15.10.2019 EP 19203445
(43) Veröffentlichungstag der Anmeldung: 24.08.2022
(73) Patentinhaber: Clariant International Ltd, 4132 Muttenz (CH)
(72) Erfinder: KRATZER, Philipp, 86637 Wertingen (DE); BROEHMER, Manuel, 82194 Gröbenzell (DE); FELL, Rainer, 86368 Gersthofen (DE)
(74) Vertreter: Clariant Produkte (Deutschland) GmbH
(86) Internationale Anmeldenummer: PCT/EP2020/077785
(87) Internationale Veröffentlichungsnummer: WO 2021/073910

(56) Entgegenhaltungen:
- WO-A1-2014/060081
- WO-A1-2014/060082
- WO-A1-2014/131514
- WO-A1-2014/166614
- WO-A1-2017/108542
- DE-A1- 102013 007 638
- DE-A1- 102018 116 113
- CHARLES W BUFFA: "RICE BRAN WAX. A NEW WAX FOR COSMETICS, DRUGS, AND TOILETRIES.", COSMETICS & TOILETRIES, vol. 91, no. 10, 1 January 1976 (1976-01-01), pages 14 - 16, XP055658779
- S. H YOON ET AL: "Composition of waxes from crude rice bran oil", JOURNAL OF THE AMERICAN OIL CHEMISTS' SOCIETY, 1 December 1982 (1982-12-01), Berlin/Heidelberg, pages 561 - 563, XP055658981, Retrieved from the Internet <URL:https://link.springer.com/article/10.1007/BF02636324> DOI: 10.1007/BF02636324
- JUNGHONG KIM: "Wax extraction and characterization from full-fat and defatted rice bran (Thesis)", 1 January 2008 (2008-01-01), Louisiana, USA, pages 1 - 136, XP055659292, Retrieved from the Internet <URL:https://digitalcommons.lsu.edu/gradschool_dissertations/886> [retrieved on 20200120]
- AVISH D MARU ET AL: "Studies on Physico-Chemical Properties of Rice Bran Wax and its Comparison with Carnauba Wax", INTERNATIONAL JOURNAL OF PHARMACEUTICAL AND PHYTOPHARMACOLOGICAL RESEARCH, vol. 203, no. 1, 1 January 2012 (2012-01-01), pages 203 - 207, XP055658816, ISSN: 2250-1029
- PANOTH ABHIRAMI ET AL: "Characterization of Refined Rice Bran Wax: An Alternative Edible Coating", INTERNATIONAL JOURNAL OF CURRENT MICROBIOLOGY AND APPLIED SCIENCES, vol. 8, no. 05, 10 May 2019 (2019-05-10), pages 91 - 97, XP055658819, ISSN: 2319-7692, DOI: 10.20546/ijcmas.2019.805.012

## Beschreibung

Die Erfindung betrifft helle Reiskleiewachsoxidate mit einem hohen Esteranteil und einer mittleren Säurezahl, ein Verfahren zur Herstellung dieser Oxidationsprodukte von Reiskleiewachs und deren Verwendung zu land- oder forstwirtschaftlichen Zwecken, als Additiv in der Kunststoffverarbeitung, in Pflegemitteln, in Druckfarben und/oder in Lacken. Gegenstand sind auch verseifte Reiskleiewachsoxidate, hergestellt durch die Verseifung der erfindungsgemäßen Reiskleiewachsoxidate.

Die Oxidation von fossilen und nichtfossilen Naturwachsen mit Chromschwefelsäure ist seit Anfang des 20. Jahrhunderts bekannt und wird technisch anhand von fossilen Montanwachsen seit 1927 im heute noch betriebenen "Gersthofener Verfahren" durchgeführt. Neben fossilem Montanwachs lassen sich mit Hilfe dieser Chromsäurebasierten Verfahren auch nachwachsende Naturwachse, wie z. B. Carnaubawachs und Candelillawachs oxidieren. Ein Verfahren zur Chromsäureoxidation von Carnaubawachs wurde in 2004 durch DE-A 10231886 beschrieben. Naturbelassene Carnaubawachse (fettgrau, Typ 4; mittelgelb, primagelb und flor, Typen 3 bis 1) und Rohmontanwachs (schwarz) sind jedoch deutlich dunkel gefärbt. Die Oxidation mit Chromschwefelsäure führt zu helleren Wachsprodukten. Allerdings führt das Chromsäure-Bleichen dieser Naturwachse, in Abhängigkeit von der eingesetzten Chromsäuremenge, meist zu hohen Säurezahlen, typischerweise im Bereich von 130 bis 160 mg KOH/g.

Bei der Oxidation mit Chromsäure kommt es im Wesentlichen zu einer Spaltung der Wachsester sowie einer in-situ-Oxidation der entstandenen Wachsalkohole zu Wachssäuren. Die Höhe der Säurezahl ist ein Maß für den Gehalt an freien Wachssäuren. Die typischen Umsätze solcher Oxidationen liegen im Bereich von 50-90% bezüglich der Estergruppen. Die auf diese Weise gebleichten Naturwachse besitzen zusätzlich zur gewünschten Aufhellung eine höhere Verseifungszahl und Säurezahl als die ungebleichten Wachse, was bei einigen Anwendungen nicht erwünscht ist. Allerdings können Reiskleiewachsoxidate mit höherer Säurezahl einfacher derivatisiert werden, beispielsweise durch Veresterung.

Für manche Anwendungen ist es von Vorteil, wenn die Säurezahl relativ niedrig bleibt, allerdings noch hoch genug ist, um Derivatisierungen in maßgeblichem Ausmaß zu ermöglichen. Die Säurezahl der Wachsoxidate kann beispielsweise durch Veresterung der im Wachs und/oder Wachsoxidat enthaltenen Säuren mit Alkoholen gesenkt werden.

Diese Veresterung wird häufig mit polyvalenten Alkoholen, wie z.B. Ethylenglykol, Butylenglykol oder Glycerin vorgenommen. Allerdings ist hiermit ein zusätzlicher Schritt verbunden, der aus prozessökonomischen Gründen nachteilig ist.

Ein wirtschaftlich interessantes Naturwachs ist Reiskleiewachs, das bei der Verarbeitung von Rohreis (oryza sativa) in großen Mengen als Nebenprodukt anfällt. Nachdem beim Dreschen der reifen Reispflanzen die an den Körnern haftenden Deckspelzen entfernt und weitere Spelzen-Bestandteile neben anderen Verunreinigungen in der Reismühle separiert wurden, enthalten die Reiskörner noch den Keimling und sind von der Silberhaut umschlossen. Keimling und Silberhaut werden in einem weiteren Verarbeitungsschritt durch Abschleifen entfernt und liefern neben dem geschliffenen Reis die Reiskleie. Die Reiskleie enthält Lipidanteile, die zum überwiegenden Teil aus fetten Ölen und zu einem geringeren Prozentsatz aus wachsartigen Komponenten bestehen. Die wachsartigen Komponenten finden sich in dem aus der Kleie durch Pressung oder Lösemittelextraktion gewonnenen Öl, aus dem sie aufgrund ihrer Schwerlöslichkeit bei niedrigen Temperaturen z.B. durch Ausfrieren isoliert werden können. Die berechnete potentielle Verfügbarkeit von Reiskleiewachs liegt nach Journal of Scientific & Industrial Research, 2005, Vol. 64, 866-882, würde man die gesamte Weltreisproduktion dazu nutzen, um neben Reisöl ebenfalls das Reiskleiewachs zu gewinnen, bei ca. 300.000 Tonnen pro Jahr.

Reiskleiewachs gehört nach Ullmann's Encyclopedia of Industrial Chemistry, 5th ed. 1996, Vol. A28, S. 117 zu einer Gruppe von Wachsen, der bisher nur lokale Bedeutung oder lediglich akademisches Interesse beigemessen wurde.

Beschrieben wurde die Verwendung von Reiskleiewachs in der Kosmetik (EP-A 1343454; Bräutigam, Lexikon der kosmetischen Rohstoffe, Norderstedt 2010, S. 77), als Verarbeitungshilfsmittel in Kunststoffen (JP-A H10-007862 (1998); JP-A S60-011553 (1985); JP-A S49-090739 (1974)) sowie in Druckfarben und elektrophotographischen Tonern (JP-A 2010-020304; 2010).

Die chemische Zusammensetzung von Reiskleiewachs ist trotz zahlreicher analytischer Untersuchungen mit nicht übereinstimmenden Befunden offenbar nicht völlig geklärt. Sicher hingegen ist die Zusammensetzung des Wachskörpers aus Wachsestern.

Die Reiskleiewachs-Ester bestehen hauptsächlich aus Monoestern langkettiger, gesättigter, unverzweigter Monocarbonsäuren mit langkettigen, unverzweigten, aliphatischen Monoalkoholen (nachfolgend auch "genuine Ester" genannt). Vorherrschend sind im Säureanteil der Reiskleiewachs-Ester Behen- und Lignocerinsäure, mit den Kettenlängen C22 und C24, und im Alkoholanteil der Reiskleiewachs-Ester die Kettenlängen C26, C28, C30, C32 und C34. Daneben kann das Wachs freie Fettsäuren und weitere Bestandteile wie Squalen, Phosphorlipide und Sterylester enthalten.

Der Gehalt an Wachsestern in raffiniertem und entöltem Reiskleiewachs liegt in der Regel bei größer als 96 Gew.%. In nicht-entöltem Reiskleiewachs kann der Gehalt an Wachsestern, je nach Gehalt des Reiskleieöls, auch bei nur 50 Gew.% liegen. Weitere als "Mindermengen-Bestandteile" anzusehende variable Bestandteile des Reiskleiewachses sind die nicht näher spezifizierten "Dunkelstoffe", Squalen sowie der sogenannte "Gum-Anteil". Diese Komponenten führen meist zu einer in Farbe und Anwendbarkeit schwankenden und schwer zu reproduzierenden Produktqualität.

Als übliche Technik zur Aufhellung der braunen Reiskleiewachse gilt die klassische Bleichung mit Wasserstoffperoxid. Wasserstoffperoxid-gebleichte Reiskleiewachse sind gelblich und entsprechen in ihrem Estergehalt und in ihrer Säurezahl weitgehend den Ausgangswachsen. Solche Typen werden überwiegend als entölte und raffinierte Reiskleiewachse am Markt angeboten, zeigen jedoch, da die Mindermengen-Bestandteile im Produkt verbleiben, ebenfalls schwankende Produktqualität.

CN-A 108048222, CN-A 108129302 und CN-A 108191602 aus 2018 beschreiben Reiskleiewachsoxidate, die aus entöltem Reiskleiewachs durch Oxidation mit Natriumdichromat hergestellt werden, mit einem mehrwertigen Alkohol verestert (CN-A 108129302 und CN-A 108191602) und anschließend verseift werden (CN-A 108191602). Allerdings werden keine Produkteigenschaften genannt. Aufgrund der Veresterung ist davon auszugehen, dass die Säurezahlen hoch sein müssen.

EP-A 2909273 aus 2015 offenbart Oxidationsprodukte von Reiskleiewachs, hergestellt durch Oxidation mit Chromsäure in Anwesenheit von Oxidations-Promotoren wie fluorierten Alkylsulfonsäuren, Aluminiumtrichlorid oder Salzsäure, oder unter besonders heftigem Rühren. Hierdurch werden hohe Säurezahlen angestrebt. In EP-A 2909274 werden Reiskleiewachsoxidate beschrieben, die vor der Oxidation verseift werden. Auch hier werden hohe Säurezahlen erreicht.

In JP-B S36-005526 (1961) wird die Herstellung von lösemittelhaltigen Politurmassen beschrieben, in denen ein chemisch modifiziertes Wachs auf der Grundlage von Reiskleiewachs enthalten ist. Die Modifizierung erfolgt durch Oxidation von rohem Reiskleiewachs mit Chromsäure oder Dichromatsalzen. Es werden dabei Säurezahlen von 40-45 mg KOH/g erreicht.

DE 102018116113 offenbart Reiskleiewachsoxidate mit Säurezahlen im Bereich von 45mg bis 70mg KOH/g.

Es besteht ein Bedürfnis nach einem Verfahren, um gezielt Reiskleiewachsoxidate mit mittleren Säurezahlen im Bereich von größer als 45 mg KOH/g und kleiner als 70 mg KOH/g bereitzustellen.

Es wurde nun überraschend gefunden, dass durch eine geeignete Wahl der Verfahrensparameter bei der Oxidation von Reiskleiewachs gezielt Säurezahlen, gemessen nach DIN ISO 2114 (von 2002) von größer als 45 mg KOH/g und kleiner als 70 mg KOH/g, oftmals größer als 45 mg KOH/g und kleiner als 65 mg KOH/g erreicht werden können, wenn der Anteil an mehrfachen Estern, gebildet aus mehrwertigen Alkoholen und aliphatischen Carbonsäuren mit 8 bis 20 Kohlenstoffatomen, im Reiskleiewachs kleiner ist als 5 Gew.-%.

Die Esterwachse besitzen die gewünschte Säurezahl, ohne dass ein zusätzlicher Veresterungsschritt notwendig ist. Solche Verbindungen konnten bisher nur durch Oxidation von Reiskleiewachs hin zu Säurezahlen im Bereich von ca. 140 mg KOH/g und anschließender Veresterung mit mehrfachen Alkoholen erhalten werden (EP-A 2909274).

Ein Gegenstand der Erfindung ist daher ein Verfahren zur Herstellung von Reiskleiewachsoxidaten (O) mit einer Säurezahl von größer als 45 mg KOH/g und kleiner als 70 mg KOH/g und einer Nadelpenetrationszahl kleiner 3 mm⁻¹ umfassend die Schritte:
i) Bereitstellen eines Reiskleiewachses (R), enthaltend weniger als 5 Gew.-%, bezogen auf das Gesamtgewicht des Reiskleiewachses (R), an mehrfachen Estern gebildet aus mehrwertigen Alkoholen und aliphatischen Carbonsäuren mit 8 bis 20 Kohlenstoffatomen;
ii) Bereitstellen einer Mischung (M) aus Chromtrioxid und Schwefelsäure;
iii) Durchführen der Oxidation des Reiskleiewachses (R) durch Umsetzung des Reiskleiwachses (R) mit der Mischung (M) unter Rühren und bei einer Temperatur von 90 bis 150 °C, um ein Reiskleiewachsoxidat (O) zu erhalten;
iv) Beenden der Umsetzung und Ruhenlassen der in Schritt iii) erhaltenen Reaktionsmischung bis zur Trennung der organischen Phase von der wässrigen Phase;
v) Abtrennung der organischen Phase;
vi) optionales Entfernen von Rückständen enthaltend Chromverbindungen aus der organischen Phase, um das Reiskleiewachsoxidat (O) in gereinigter Form zu erhalten,
vii) optionales Wiederholen der Folge von Schritten ii) bis vi) bis zu zwei Mal, wobei anstelle des Reiskleiewachses (R) das Reiskleiewachsoxidat (O), gegebenenfalls in gereinigter Form, eingesetzt wird,

wobei die Oxidation in Schritt iii) über einen Zeitraum von 1 bis 8 Stunden durchgeführt wird, und
wobei das Gewichtsverhältnis von insgesamt eingesetztem Chromtrioxid zu eingesetztem Reiskleiewachs (R) von 5:4 bis 9:6 (1,25 bis 1,5) ist.

Bei dem in Schritt i) bereitgestellten Reiskleiewachs (R) kann es sich um ein beliebiges Reiskleiewachs handeln, sofern es einen Anteil an mehrfachen Estern, gebildet aus mehrwertigen Alkoholen und aliphatischen Carbonsäuren mit 8 bis 20 Kohlenstoffatomen, von kleiner als 5 Gew.-%, vorzugsweise kleiner als 2 Gew.-%, besonders vorzugsweise 0,1 bis 2 Gew.-%, bezogen auf das Gesamtgewicht des Reiskleiewachses (R) hat.

Der gewünschte Anteil an mehrfachen Estern gebildet aus mehrwertigen Alkoholen und aliphatischen Carbonsäuren mit 8 bis 20 Kohlenstoffatomen kann bereits in dem Reiskleiewachs im Rohzustand enthalten sein, kann allerdings auch durch eine Vorbehandlung des Reiskleiewachses eingestellt werden. Vorzugsweise ist der Anteil bereits in dem Reiskleiewachs (R) im Rohzustand enthalten. In diesem Fall ist es bevorzugt, dass das Reiskleiewachs (R) nicht vorbehandelt wird.

Sind hingegen Anteile an mehrfachen Estern, gebildet aus mehrwertigen Alkoholen und aliphatischen Carbonsäuren mit 8 bis 20 Kohlenstoffatomen, 5 Gew.-% oder höher, muss das Reiskleiewachs (R) vor der Bereitstellung in Schritt i) vorbehandelt werden. In diesem Fall ist es von Vorteil, wenn die Vorbehandlung keine Verseifung der im Reiskleiewachs (R) enthaltenen Ester umfasst.

Stattdessen ist eine Extraktion der mehrfachen Estern gebildet aus mehrwertigen Alkoholen und aliphatischen Carbonsäuren mit 8 bis 20 Kohlenstoffatomen mit einem oder mehreren organischen Lösungsmitteln bevorzugt, wobei die Extraktion durchgeführt wird, bis der gewünschte Anteil an mehrfachen Estern, gebildet aus mehrwertigen Alkoholen und aliphatischen Carbonsäuren mit 8 bis 20 Kohlenstoffatomen, von kleiner als 5 Gew.-% erreicht wird. Geeignet sind beliebige organische Lösungsmittel, die Öle und Fette lösen können, beispielsweise Ethylacetat oder Aceton, vorzugsweise Ethylacetat.

Bei den mehrfachen Estern, gebildet aus mehrwertigen Alkoholen und aliphatischen Carbonsäuren mit 8 bis 20 Kohlenstoffatomen, handelt es sich vorzugsweise um Di-und Triglyceride von aliphatischen Carbonsäuren mit 8 bis 20 Kohlenstoffatomen, insbesondere um Öle, die von Natur aus in Reiskleie enthalten sind, vor Allem um Reiskleieöl. Entsprechend kann es sich bei der Extraktion mit einem organischen Lösungsmittel um eine Entölung handeln.

In diesem Fall kann der Anteil an mehrfachen Estern, gebildet aus mehrwertigen Alkoholen und aliphatischen Carbonsäuren mit 8 bis 20 Kohlenstoffatomen, von kleiner als 5 Gew.-% auch als Ölgehalt des Reiskleiewachses bezeichnet werden.

Vorzugsweise wird das Reiskleiewachs (R), unabhängig von dem Anteil an mehrfachen Estern gebildet aus mehrwertigen Alkoholen und aliphatischen Carbonsäuren mit 8 bis 20 Kohlenstoffatomen im Rohzustand, zu keinem Zeitpunkt vor der Oxidation durch Verseifung vorbehandelt.

Die in Schritt ii) bereitgestellte Mischung (M) aus Chromtrioxid und Schwefelsäure kann eine beliebige Mischung sein, sofern diese in der Lage ist, oxidierbare Bestandteile von Reiskleiewachs zu oxidieren. Häufig werden solche Mischungen aus Chromtrioxid und Schwefelsäure auch als Chomschwefelsäure bezeichnet. Bei der Schwefelsäure handelt es sich um konzentrierte Schwefelsäure mit einem Anteil an Schwefelsäure von mindestens 90 Gew.-%, vorzugsweise mindestens 96 Gew.-%, besonders vorzugsweise mindestens 99 Gew.-%. Diese kann optional rauchende Schwefelsäure sein, also zusätzlich Schwefeltrioxid enthalten. Die Konzentration von Chromtrioxid in der Mischung (M) beträgt vorzugsweise 50 bis 200 g/L, besonders vorzugsweise 70 bis 150 g/L, ganz besonders vorzugsweise 80 bis 120 g/L.

In Schritt iii) des erfindungsgemäßen Verfahrens wird die Oxidation des Reiskleiewachses (R) durch Umsetzung des Reiskleiwachses (R) mit der Mischung (M) unter Rühren und bei einer Temperatur von 80 bis 150 °C, vorzugsweise von 90 bis 140 °C, besonders vorzugsweise von 105 bis 130 °C durchgeführt, um ein Reiskleiewachsoxidat (O) zu erhalten.

Das Gewichtsverhältnis von insgesamt eingesetztem Chromtrioxid zu eingesetztem Reiskleiewachs (R) ist vorzugsweise von 13:10 bis 9:6 (1,3 bis 1,5). Ist das Verhältnis kleiner als 5:4, werden zu niedrige Säurezahlen erreicht. Ist das Verhältnis größer als 2:1, werden zu hohe Säurezahlen erreicht.

Dieser Schritt kann optional in mehrere Schritte unterteilt sein. Beispielsweise kann Schritt iii) das Vorlegen der Mischung (M) und anschließendes Zugeben des Reiskleiewachses (R) umfassen. Alternativ kann Schritt iii) das Vorlegen des Reiskleiewachses (R) und anschließendes Zugeben der Mischung (M) umfassen. In diesen Fällen kann die Zugabe der jeweils zweiten Komponente (R) oder (M) zum Beispiel portionsweise, kontinuierlich oder in einer Charge erfolgen, vorzugsweise portionsweise oder kontinuierlich, besonders vorzugsweise portionsweise.

Optional kann die Temperatur des Reiskleiewachses (R) und/oder der Mischung (M) während der Zugabe von der Reaktionstemperatur abweichen und erst nach erfolgter Zugabe der zweiten Komponente auf den erforderlichen Wert von 80 bis 150 °C, vorzugsweise von 90 bis 140 °C, besonders vorzugsweise von 105 bis 130 °C eingestellt werden. Beispielsweise kann die Temperatur bei der Zugabe einen Wert von 70 bis 130 °C, vorzugsweise von 80 bis 110 °C haben. Vorzugsweise liegt das Reiskleiewachs (R) während der Zugabe in geschmolzener Form vor.

In einer Ausführungsform wird die bereitgestellte Mischung (M) aus Chromtrioxid und Schwefelsäure vorgelegt und auf eine Temperatur von 70 bis 130 °C erwärmt, und das Reiskleiewachs (R) in festem Zustand portionsweise zugegeben. Nach erfolgter Zugabe wird die Temperatur auf 80 bis 150 °C eingestellt und die Oxidation durchgeführt.

In einer anderen Ausführungsform wird die bereitgestellte Mischung (M) aus Chromtrioxid und Schwefelsäure vorgelegt und auf eine Temperatur von 70 bis 130 °C erwärmt, und das Reiskleiewachs (R) in geschmolzenem Zustand, vorzugsweise bei einer Temperatur von 70 bis 130 °C, portionsweise zugegeben. Nach erfolgter Zugabe wird die Temperatur auf 80 bis 150 °C eingestellt und die Oxidation durchgeführt.

In einer weiteren Ausführungsform wird das Reiskleiewachs (R) vorgelegt und bei einer Temperatur von 70 bis 130 °C geschmolzen, und die Mischung (M) aus Chromtrioxid und Schwefelsäure portionsweise kalt zugegeben.

Nach erfolgter Zugabe wird die Temperatur auf 80 bis 150 °C eingestellt und die Oxidation durchgeführt.

In einer anderen Ausführungsform wird das Reiskleiewachs (R) vorgelegt und bei einer Temperatur von 70 bis 130 °C geschmolzen, und die Mischung (M) aus Chromtrioxid und Schwefelsäure portionsweise heiß, vorzugsweise bei einer Temperatur von 70 bis 130 °C, zugegeben. Nach erfolgter Zugabe wird die Temperatur auf 80 bis 150 °C eingestellt und die Oxidation durchgeführt.

In einer weiteren Ausführungsform werden Reiskleiewachs (R) und die Mischung (M) aus Chromtrioxid und Schwefelsäure zusammen bei Raumtemperatur vorgelegt und langsam auf eine Temperatur von 80 bis 150 °C erwärmt, und bei dieser Temperatur die Oxidation durchgeführt.

Zumindest die Oxidation bei 80 bis 150 °C, vorzugsweise auch die Zugabe des Reiskleiewachses (R) und/oder der Mischung (M) findet unter Rühren statt. Das Rühren kann hierbei auf beliebige Weise erfolgen, beispielsweise mit einem mechanisch betriebenen Rührwerk, oder einem magnetisch betriebenen Rührwerk. Vorzugsweise erfolgt das Rühren mit einem mechanisch betriebenen Rührwerk, besonders vorzugsweise mit einem mechanisch betriebenen Rührwerk umfassend einen KPG-Rührer.

Die Rührgeschwindigkeit in Schritt iii) liegt vorzugsweise in einem Bereich von 100 und 500 U/min (Umdrehungen pro Minute), besonders vorzugsweise von 120 bis 300 U/min, ganz besonders vorzugsweise von 170 bis 250 U/min, da bei einer Rührgeschwindigkeit unter 100 U/min die für die effiziente Oxidation benötigte Vermischung nicht gegeben ist und bei einer Rührgeschwindigkeit von über 500 U/min ein erhöhtes Risiko der Bildung einer nicht trennbaren Emulsion besteht.

Die Oxidation des Reiskleiewachses in Schritt iii) bei der Temperatur von 90 bis 150 °C erfolgt über einen Zeitraum von 1 bis 8 Stunden, vorzugsweise von 2 bis 5 Stunden, besonders vorzugsweise von 3 bis 4,5 Stunden.

Außerdem ist es von Vorteil, wenn der Reaktionsmischung aus Reiskleiewachs (R) und der Mischung (M) keine Oxidationspromotoren zugesetzt werden, da diese häufig die Spaltung der Esterbindungen führen können und daher die Säurezahl in dem Reiskleiewachsoxidat (O) erhöhen können. Vorzugsweise werden daher keine Oxidationspromotoren, insbesondere keine Oxidationspromotoren wie z.B. Emulgatoren (z.B. Alkansulfonate, fluorierte Alkansulfonate), Tenside, polymere Tenside, stickstoffhaltige Kationtenside, Phasentransferkatalysatoren, Fenton Reagenzien Metallsalze, Salzsäure oder dergleichen bei der Oxidation eingesetzt.

Nach Erreichen der gewünschten Reaktionsdauer wird in Schritt iv) die Umsetzung beendet und die Reaktionsmischung bis zur Trennung der organischen Phase von der wässrigen Phase ruhen gelassen. Unter "Beenden der Umsetzung" ist zu verstehen, dass das Rühren unterbrochen und das Heizen beendet wird. Hierbei beginnt die Trennung der aufschwimmenden organischen Phase, enthaltend das Reiskleiewachsoxidat (O), von der absinkenden wässrigen Phase, enthaltend Schwefelsäure und Chromverbindungen. Optional kann die Reaktionsmischung vor dem Ruhenlassen in eine Vorrichtung überführt werden, in der nach der Trennung der organischen Phase von der wässrigen Phase eine Abtrennung der organischen Phase erleichtert wird. Ein Beispiel für eine solche Vorrichtung ist ein Scheidetrichter. Andere Vorrichtungen zu diesem Zweck sind dem Fachmann bekannt und hier anwendbar.

In Schritt v) wird die organische Phase enthaltend das Reiskleiewachsoxidat abgetrennt. Dies kann beispielsweise mittels Scheidetrichter erfolgen. Alternativ kann die aufschwimmende organische Phase mithilfe von geeigneten technischen Mitteln abgeschöpft werden. Ebenso ist ein Abgießen der organischen Phase über einen Gefäßrand möglich. Wege zur Abtrennung von organischen Phasen von wässrigen Phasen nach einer Phasenseparation sind dem Fachmann grundsätzlich bekannt und hier anwendbar.

Des Weiteren kann optional in Schritt vi) die abgetrennte organische Phase enthaltend das Reiskleiewachsoxidat weiter aufgearbeitet werden, um Rückstände enthaltend Chromverbindungen aus der organischen Phase zu entfernen und damit das Reiskleiewachsoxidat in gereinigter Form zu erhalten.

Die Aufarbeitung kann auf beliebige Weise erfolgen, die für die Trennung von polaren und/oder wasserlöslichen Substanzen von organischen Substanzen geeignet ist. Beispielsweise kann eine chromatographische Aufreinigung der organischen Phase oder eine Filtration über Kieselgel erfolgen.

Vorzugsweise erfolgt das Entfernen von Rückständen enthaltend Chromverbindungen durch Waschen der organischen Phase mit einer wässrigen Lösung von Oxalsäure und/oder Schwefelsäure.

Alternativ kann das Entfernen von Rückständen enthaltend Chromverbindungen vorzugsweise durch Waschen der organischen Phase mit Wasser erfolgen. Alternativ kann das Entfernen von Rückständen enthaltend Chromverbindungen vorzugsweise durch Zentrifugieren der organischen Phase erfolgen. Unter "Waschen" ist hierbei jeweils das Vermischen der organischen Phase mit dem jeweiligen Mittel zum Waschen und anschließende Phasentrennung entsprechend Schritten iv) und v) zu verstehen.

In einer bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem einfachen oder mehrfachen Waschen der organischen Phase mit Wasser.

In einer weiteren bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem Zentrifugieren der organischen Phase.

In einer weiteren bevorzugten Ausführungsform erfolgt das Entfernen von Rückständen enthaltend Chromverbindungen durch einfaches oder mehrfaches Waschen der organischen Phase mit Wasser, gefolgt von dem Zentrifugieren der organischen Phase.

In einer besonders bevorzugten Ausführungsform erfolgt das Entfernen von Rückständen enthaltend Chromverbindungen durch einfaches oder mehrfaches Waschen der organischen Phase mit einer wässrigen Lösung von Oxalsäure und Schwefelsäure, gefolgt von dem einfachen oder mehrfachen Waschen der organischen Phase mit Wasser, gefolgt von dem Zentrifugieren der organischen Phase.

Optional kann im Schritt vii) die Folge der Schritte ii) bis vi) bis zu zwei Mal wiederholt werden, wobei anstelle des Reiskleiewachses (R) das Reiskleiewachsoxidat (O), gegebenenfalls in gereinigter Form, eingesetzt wird. Vorzugsweise wird im Schritt vii) die Folge der Schritte ii) bis vi) bis zu einem Mal wiederholt. In diesen Fällen wird beim ersten Durchführen der Schritte ii) bis vi) mindestens die Hälfte des insgesamt bereitgestellten Chromtrioxids eingesetzt, und bei den Wiederholungen der Schritte ii) bis vi) der übrige Teil. Besonders vorzugsweise wird die Folge der Schritte ii) bis vi) nicht wiederholt.

Ein weiterer Gegenstand der Erfindung ist ein Reiskleiewachsoxidat (O) mit einer Säurezahl (Gemessen nach DIN ISO 2114 von 2002) größer als 45 mg KOH/g und kleiner als 70 mg KOH/g und mit einer Nadelpenetrationszahl kleiner 3 mm⁻¹, hergestellt nach dem erfindungsgemäßen Verfahren. Vorzugsweise hat das Reiskleiewachsoxidat eine Säurezahl größer als 45 mg KOH/g und kleiner als 65 mg KOH/g.

Ebenfalls Gegenstand der Erfindung ist ein Reiskleiewachsoxidat (O) mit einer Säurezahl von größer als 45 mg KOH/g und kleiner als 70 mg KOH/g , vorzugsweise kleiner als 65 mg KOH/g, mit einer Nadelpenetrationszahl kleiner 3 mm⁻¹ und mit einem Anteil an mehrfachen Estern gebildet aus mehrwertigen Alkoholen und aliphatischen Carbonsäuren mit 22 bis 36 Kohlenstoffatomen kleiner als 5 Gew.-%, bezogen auf das Gesamtgewicht des Reiskleiewachsoxidats (O).

Das erfindungsgemäße Reiskleiewachsoxidat (O) hat vorzugsweise einen Anteil an mehrfachen Estern gebildet aus mehrwertigen Alkoholen und aliphatischen Carbonsäuren mit 22 bis 36 Kohlenstoffatomen kleiner als 5 Gew.-%, besonders vorzugsweise kleiner als 3 Gew.-%, ganz besonders vorzugsweise kleiner als 1 Gew.- %, bezogen auf das Gesamtgewicht des Reiskleiewachsoxidats (O).

In einer Ausführungsform enthält das Reiskleiewachsoxidat (O)
a) 10 bis 40 Gew.-%, bezogen auf das Gesamtgewicht des Reiskleiewachsoxidats (O), freie aliphatische Carbonsäuren mit 8 bis 36 Kohlenstoffatomen;
b) 0 bis 5 Gew.-%, bezogen auf das Gesamtgewicht des Reiskleiewachsoxidats (O), freie aliphatische Alkohole mit 24 bis 36 Kohlenstoffatomen;
c) 0 bis 10 Gew.-%, bezogen auf das Gesamtgewicht des Reiskleiewachsoxidats (O), freie aliphatische Dicarbonsäuren mit 10 bis 30 Kohlenstoffatomen;
d) 45 bis 90 Gew.-%, bezogen auf das Gesamtgewicht des Reiskleiewachsoxidats (O), genuine Ester mit 42 bis 64 Kohlenstoffatomen; und
e) 0 bis 15 Gew.-%, bezogen auf das Gesamtgewicht des Reiskleiewachsoxidats (O), weitere im Reiskleiewachs enthaltene natürliche Bestandteile.

In einer bevorzugten Ausführungsform enthält das Reiskleiewachsoxidat (O)
a) 13 bis 35 Gew.-%, bezogen auf das Gesamtgewicht des Reiskleiewachsoxidats (O), freie aliphatische Carbonsäuren mit 8 bis 36 Kohlenstoffatomen;
b) 0 bis 3 Gew.-%, bezogen auf das Gesamtgewicht des Reiskleiewachsoxidats (O), freie aliphatische Alkohole mit 24 bis 36 Kohlenstoffatomen;
c) 0 bis 4 Gew.-%, bezogen auf das Gesamtgewicht des Reiskleiewachsoxidats (O), freie aliphatische Dicarbonsäuren mit 10 bis 30 Kohlenstoffatomen;
d) 50 bis 87 Gew.-%, bezogen auf das Gesamtgewicht des Reiskleiewachsoxidats (O), genuine Ester mit 42 bis 64 Kohlenstoffatomen; und
e) 0 bis 15 Gew.-%, bezogen auf das Gesamtgewicht des Reiskleiewachsoxidats (O), weitere im Reiskleiewachs enthaltene natürliche Bestandteile.

In einer bevorzugten Ausführungsform enthält das Reiskleiewachsoxidat (O)
a) 15 bis 30 Gew.-%, bezogen auf das Gesamtgewicht des Reiskleiewachsoxidats (O), freie aliphatische Carbonsäuren mit 8 bis 36 Kohlenstoffatomen;
b) 0 bis 1 Gew.-%, bezogen auf das Gesamtgewicht des Reiskleiewachsoxidats (O), freie aliphatische Alkohole mit 24 bis 36 Kohlenstoffatomen;
c) 0 bis 3 Gew.-%, bezogen auf das Gesamtgewicht des Reiskleiewachsoxidats (O), freie aliphatische Dicarbonsäuren mit 10 bis 30 Kohlenstoffatomen;
d) 55 bis 85 Gew.-%, bezogen auf das Gesamtgewicht des Reiskleiewachsoxidats (O), genuine Ester mit 42 bis 64 Kohlenstoffatomen; und
e) 0 bis 15 Gew.-%, bezogen auf das Gesamtgewicht des Reiskleiewachsoxidats (O), weitere im Reiskleiewachs enthaltene natürliche Bestandteile.

Vorzugsweise ist hierbei Lignocerinsäure zu maximal 5 Gew.-%, besonders vorzugsweise maximal 3 Gew.-%, bezogen auf das Gesamtgewicht des Reiskleiewachsoxidats (O), in dem Reiskleiewachsoxidat (O) enthalten.

Die Gewichtsanteile und Kettenlängenverteilungen können beispielsweise mittels Gaschromatographie gemessen werden.

Des Weiteren haben die erfindungsgemäßen Reiskleiewachsoxidate typischerweise einen Tropfpunkt gemessen nach DIN ISO 2176 (1997) zwischen 70°C und 90°C, bevorzugt zwischen 75°C und 80°C.

Bevorzugt haben die erfindungsgemäßen Reiskleiewachsoxidate im Vergleich zu herkömmlichen Oxidaten (z.B. Montanwachsbasis) eine besonders helle bis weiße Farbe. Die Farbe lässt sich anhand der lodfarbzahl gemessen nach DIN 6162 (2014) bestimmen. Sie liegt bei den erfindungsgemäßen Reiskleiewachsoxidaten bei kleiner als 20, vorzugsweise bei kleiner als 6, insbesondere bei kleiner als 2.

Vorzugsweise erhöht sich durch die Oxidation des Reiskleiewachses die Verseifungszahl gemessen nach DIN ISO 3681 (2007) um höchstens 40%, bevorzugt um höchstens 30%, besonders bevorzugt um höchstens 20%. Die Erhöhung der Verseifungszahl kann mechanistisch durch die Spaltung der Wachsester und die anschließende Oxidation der Wachsalkohole zu Säuren erklärt werden. Zusätzlich wird ein Teil ungesättigter Kohlenstoff-Kohlenstoffbindungen durch das Oxidationsmittel gespalten und ebenfalls zu Säuren aufoxidiert.

Damit ist die Verseifungszahl auch eine Maßzahl für die tatsächlich stattgefundene Oxidation in Abgrenzung zur Verseifung, bei der sich die Verseifungszahl bekanntlich nicht ändert, und in Abgrenzung zu anderen Bleichverfahren bei denen es lediglich zu einer Aufhellung des Produkts kommt. Beispielsweise bewirkt die Bleichung von Reiskleiewachs mit Wasserstoffperoxid keine chemische Modifikation des Wachses im Sinne der Erfindung, da hier lediglich verfärbende Verunreinigungen und Nebenbestandteile beseitigt werden, ohne dass die eigentliche Wachsstruktur verändert wird.

Das erfindungsgemäße Reiskleiewachsoxidat (O) zeichnet sich typischerweise durch eine besonders gute Thermostabilität, gemessen nach DIN 51006 (2005) mit einem Massenverlust bis zum Erreichen einer Temperatur von 300 °C (Heizrate: 5 °C/min) von kleiner als 25%, bevorzugt kleiner als 20%, besonders bevorzugt kleiner als 17 % aus.

Weiterer Gegenstand der Erfindung ist ein verseiftes Reiskleiewachsoxidat (V) hergestellt durch Verseifen des oben beschriebenen Reiskleiewachsoxidats (O) mit einem basischen Metallsalz, ausgewählt aus der Gruppe bestehend aus Metallhydroxiden (z.B. NaOH, KOH, Ca(OH)₂ und Zn(OH)₂, etc.), Metalloxiden (z.B. CaO, etc.), Metallcarbonaten (z.B. Na₂CO₃, CaCO₃, etc.) oder mit wässrigen Laugen (wie z.B. NaOH, KOH, etc.). Bevorzugt sind Alkalimetallhydroxide und/oder Erdalkalimetallhydroxide, insbesondere NaOH, KOH und/oder Ca(OH)₂.

Entsprechende Herstellvorschriften finden sich beispielhaft etwa in DE4019167. Bevorzugt zeichnen sich die verseiften Produkte neben der nachwachsenden Rohstoffbasis durch eine besonders gute Thermostabilität, gemessen nach DIN 51006 mit einem Massenverlust bis zum Erreichen einer Temperatur von 300 °C (Heizrate: 5 °C/min) von kleiner 10%, bevorzugt kleiner 5% aus.

Ebenfalls Gegenstand der Erfindung ist die Verwendung der erfindungsgemäßen Reiskleiewachsoxidate (O) oder der erfindungsgemäßen versiften Reiskleiewachsoxidate (V) zu land- oder forstwirtschaftlichen Zwecken, als Additiv in der Kunststoffverarbeitung, in Pflegemitteln, in Druckfarben und/oder in Lacken.

Die Erfindung wird durch die nachfolgenden Beispiele und Ansprüche näher erläutert.

### Substanzcharakterisierung

Die in Tabelle 1 aufgeführten Standardmethoden, die auch in der Charakterisierung von Montanwachsen und Montanwachs-Derivaten angewandt werden, dienen zur Bestimmung der Kennzahlen von Reiskleiewachsen, Reiskleiewachsoxidaten und weiteren Derivaten der Reiskleiewachse.

**Tabelle 1**

| | Methode |
|---|---|
| Säurezahl (SZ) [mg KOH/g] | ISO 2114 |
| Verseifungszahl (VZ) [mg KOH/g] | ISO 3681 |
| Tropfpunkt (TP) [°C] | ISO 2176 |
| Schmelzpunkt (SP) [°C] | DIN EN ISO 11357-1 |
| Schmelzenthalpie (SE) [J/g] | DIN EN ISO 11357-1 |
| Ölgehalt (ÖG) [Gew.-%] | AOCS Ja 4-46 |
| Thermogravimetrische Analyse (TGA) [Gew.-%] | DIN 51006 |
| von 25 bis 300°C bei 5K/min, dann 30min bei 300 °C. | |
| Messung des Masseverlusts bei Erreichen von 300 °C und nach 30 min bei 300 °C | |
| Iodfarbzahl (IFZ) | DIN 6162 |
| Ca-Gehalt [Gew.-%] (CaG) | DGF M-IV 4 |
| Nadelpenetrationszahl [mm⁻¹] (NPZ) | DIN 51579 |

### Kettenlängenverteilungen

Die Kettenlängenverteilungen der Bestandteile der Reiskleiewachsoxidate wurden mittels Gaschromatographie bestimmt. Als Vergleichssubstanzen dienten Wachssäuren und Wachsalkohole mit Kohlenstoffkettenlängen zwischen C6 und C36. Wachsester mit C44 bis C58 wurden durch Kombination der Modellsubstanzen dargestellt. Um die Peaks der Gaschromatogramme der Reiskleiewachse zu identifizieren wurde zu einer Wachsprobe jeweils eine definierte Menge der einzelnen Komponenten zugegeben und eine deutliche Zunahme der Fläche des entsprechenden Peaks beobachtet. Die Messbedingungen sind in Tabelle 2 dargestellt.

**Tabelle 2**

| | |
|---|---|
| Säule | Agilent Technologies HP-1 (DB-1) Length 15m I.D.0,25mm Film 0,10µm |
| Detektor | 310°C FID |
| Injektor | 300°C Split 1:100 |
| Trägergas | Helium |
| Lösungsmittel | Toluol |
| Konzentration | 30mg/ml |
| Injektionsmenge | 1µl |
| Temperaturprogramm | 40 bis 320°C 5K/min; 50min bei 320°C halten |

Als Rohstoff wurde ein Reiskleiewachs (RBW 1) im Rohzustand eingesetzt. Die Eigenschaften des Reiskleiewachses im Rohzustand sind in Tabelle 3 dargestellt.

**Tabelle 3 (Methoden, Abkürzungen und Einheiten in Tabelle 1)**

| Rohstoff | SZ | VZ | TP | SP | SE | ÖG | TGA |
|---|---|---|---|---|---|---|---|
| RBW 1 | 1,3 | 83 | 77 | 79 | -192 | 1,9 | 1,2 / 6,4 |

### Beispiele 1 bis 3

In einem 3 L Reaktionsgefäß mit Rührer, Temperaturfühler, Tropftrichter und Rückflusskühler wurde die in Tabelle 4 angegebene Menge Chromtrioxid in Schwefelsäure (Konzentration: 100g CrO₃/L) vorgelegt und auf 100°C erwärmt. Anschließend wurde geschmolzenes (90 °C) Reiskleiewachs im Rohzustand portionsweise zugegeben. Die Temperatur des Reaktionsgemisches wurde auf 110°C eingestellt und 4 h mit ca. 200 U/min mit einem KPG-Rührer gerührt. Das Heizen sowie Rühren wurde eingestellt. Sobald sich die Phasen getrennt haben wurde die wässrige Phase abgetrennt.

Die organische Phase wurde durch Waschen mit einer wässrigen Lösung von Oxalsäure und Schwefelsäure und anschließend durch Waschen mit Wasser von Chromrückständen befreit, in warme Zentrifugengläser abgelassen und zentrifugiert.

Die Bedingungen der Oxidationen und Eigenschaften der Reiskleiewachsoxidate sind in Tabelle 4 angegeben.

**Tabelle 4:**

| Beispiel | 1 | 2 | 3 |
|---|---|---|---|
| RBW 1 [g] | 150 | 150 | 150 |
| CrO₃/H₂SO₄ [L] | 1,95 | 2,25 | 2,55 |
| Reaktionsdauer [h] | 4 | 4 | 4 |
| Reaktionstemperatur [°C] | 110 | 110 | 110 |
| Zeit [min] bis Phasentrennung | 2 | 2 | 2 |
| SZ | 45,7 | 52,2 | 64,1 |
| VZ | 106 | 113 | 116 |
| TP | 77 | 78 | 76 |
| SP | 81 | 79 | 80 |
| SE | -229,69 | -225,74 | -227,14 |
| TGA | 11,21/28,91 | 14,61/35,22 | 16,51/39,13 |
| IFZ | 1,4 | 0,3 | 0,2 |
| NPZ | 2 | 3 | 3 |

## Patentansprüche

1. Verfahren zur Herstellung von Reiskleiewachsoxidaten (O) mit einer Säurezahl von größer als 45 mg KOH/g und kleiner als 70 mg KOH/g und einer Nadelpenetrationszahl kleiner 3 mm⁻¹ umfassend die Schritte:
i) Bereitstellen eines Reiskleiewachses (R), enthaltend weniger als 5 Gew.- %, bezogen auf das Gesamtgewicht des Reiskleiewachses (R), an mehrfachen Estern gebildet aus mehrwertigen Alkoholen und aliphatischen Carbonsäuren mit 8 bis 20 Kohlenstoffatomen;
ii) Bereitstellen einer Mischung (M) aus Chromtrioxid und Schwefelsäure;
iii) Durchführen der Oxidation des Reiskleiewachses (R) durch Umsetzung des Reiskleiwachses (R) mit der Mischung (M) unter Rühren und bei einer Temperatur von 90 bis 150 °C, um ein Reiskleiewachsoxidat (O) zu erhalten;
iv) Beenden der Umsetzung und Ruhenlassen der in Schritt iii) erhaltenen Reaktionsmischung bis zur Trennung der organischen Phase von der wässrigen Phase;
v) Abtrennung der organischen Phase;
vi) optionales Entfernen von Rückständen enthaltend Chromverbindungen aus der organischen Phase, um das Reiskleiewachsoxidat (O) in gereinigter Form zu erhalten,
vii) optionales Wiederholen der Folge von Schritten ii) bis vi) bis zu zwei Mal, wobei anstelle des Reiskleiewachses (R) das Reiskleiewachsoxidat (O), gegebenenfalls in gereinigter Form, eingesetzt wird,
wobei die Oxidation in Schritt iii) über einen Zeitraum von 1 bis 8 Stunden durchgeführt wird, und
wobei das Gewichtsverhältnis von insgesamt eingesetztem Chromtrioxid zu eingesetztem Reiskleiewachs (R) von 5:4 bis 9:6 ist.

2. Verfahren gemäß Anspruch 1, wobei das Entfernen von Rückständen enthaltend Chromverbindungen in Schritt vi) durchgeführt wird und das Waschen der organischen Phase mit einer wässrigen Lösung von Oxalsäure und/oder Schwefelsäure umfasst.

3. Verfahren gemäß mindestens einem der Ansprüche 1 oder 2, wobei das Entfernen von Rückständen enthaltend Chromverbindungen in Schritt vi) durchgeführt wird und das Waschen der organischen Phase mit Wasser umfasst.

4. Verfahren gemäß mindestens einem der Ansprüche 1 bis 3, wobei das Entfernen von Rückständen enthaltend Chromverbindungen in Schritt vi) durchgeführt wird und Zentrifugieren der organischen Phase umfasst.

5. Verfahren gemäß mindestens einem der Ansprüche 1 bis 4, wobei die Konzentration von Chromtrioxid in der Mischung (M) von 50 bis 200 g/L beträgt.

6. Verfahren gemäß mindestens einem der Ansprüche 1 bis 5, wobei die Oxidation in Schritt iii) über einen Zeitraum von 2 bis 5 Stunden durchgeführt wird.

7. Verfahren gemäß mindestens einem der Ansprüche 1 bis 6, wobei die Rührgeschwindigkeit in Schritt iii) zwischen 100 und 500 U/min beträgt.

8. Verfahren gemäß mindestens einem der Ansprüche 1 bis 7, wobei der Reaktionsmischung keine zusätzlichen Oxidationspromotoren zugesetzt werden.

9. Reiskleiewachsoxidat (O) mit einer Säurezahl von größer als 45 mg KOH/g und kleiner als 70 mg KOH/g und einer Nadelpenetrationszahl kleiner 3 mm⁻¹, hergestellt nach dem Verfahren gemäß mindestens einem der Ansprüche 1 bis 8.

10. Reiskleiewachsoxidat (O) gemäß Anspruch 9 mit einem Anteil an mehrfachen Estern gebildet aus mehrwertigen Alkoholen und aliphatischen Carbonsäuren mit 22 bis 36 Kohlenstoffatomen kleiner als 5 Gew.-%, bezogen auf das Gesamtgewicht des Reiskleiewachsoxidats (O).

11. Reiskleiewachsoxidat (O) mit einer Säurezahl von größer als 45 mg KOH/g und kleiner als 70 mg KOH/g, einer Nadelpenetrationszahl kleiner 3 mm⁻¹ und mit einem Anteil an mehrfachen Estern gebildet aus mehrwertigen Alkoholen und aliphatischen Carbonsäuren mit 22 bis 36 Kohlenstoffatomen kleiner als 5 Gew.-%, bezogen auf das Gesamtgewicht des Reiskleiewachsoxidats (O).

12. Reiskleiewachsoxidat (O) gemäß Anspruch 10 oder 11 enthaltend:
a) 10 bis 40 Gew.-%, bezogen auf das Gesamtgewicht des Reiskleiewachsoxidats (O), freie aliphatische Carbonsäuren mit 8 bis 36 Kohlenstoffatomen;
b) 0 bis 5 Gew.-%, bezogen auf das Gesamtgewicht des Reiskleiewachsoxidats (O), freie aliphatische Alkohole mit 24 bis 36 Kohlenstoffatomen;
c) 0 bis 10 Gew.-%, bezogen auf das Gesamtgewicht des Reiskleiewachsoxidats (O), freie aliphatische Dicarbonsäuren mit 10 bis 30 Kohlenstoffatomen;
d) 45 bis 90 Gew.-%, bezogen auf das Gesamtgewicht des Reiskleiewachsoxidats (O), genuine Ester mit 42 bis 64 Kohlenstoffatomen; und
e) 0 bis 15 Gew.-%, bezogen auf das Gesamtgewicht des Reiskleiewachsoxidats (O), weitere im Reiskleiewachs enthaltene natürliche Bestandteile.

13. Reiskleiewachsoxidat (O) gemäß mindestens einem der Ansprüche 9 bis 12, enthaltend höchstens 10 Gew.-%, bezogen auf das Gesamtgewicht des Reiskleiewachsoxidats (O), Lignocerinsäure.

14. Verseiftes Reiskleiewachsoxidat hergestellt durch Verseifen des Reiskleiewachsoxidats (O) gemäß einem der Ansprüche 1 bis 13 mit einem basischen Metallsalz, vorzugsweise einem Alkalimetallhydroxid und/oder Erdalkalimetallhydroxid.

15. Verwendung des Reiskleiewachsoxidats (O) gemäß mindestens einem der Ansprüche 9 bis 13 oder eines verseiften Reiskleiewachsoxidats (V) gemäß Anspruch 14 zu land- oder forstwirtschaftlichen Zwecken, als Additiv in der Kunststoffverarbeitung, in Pflegemitteln, in Druckfarben und/oder in Lacken.

## Claims

1. Process for the preparation of rice bran wax oxidates (O) having an acid value of greater than 45 mg KOH/g and less than 70 mg KOH/g and a needle penetration number of less than 3 mm⁻¹ comprising the steps of:
i) providing a rice bran wax (R) containing less than 5% by weight, based on the total weight of the rice bran wax (R), of polyesters formed from polyhydric alcohols and aliphatic carboxylic acids having 8 to 20 carbon atoms;
ii) providing of a mixture (M) of chromium trioxide and sulphuric acid;
iii) performing the oxidation of the rice bran wax (R) by reacting the rice bran wax (R) with the mixture (M) while stirring and at a temperature of 90 to 150°C to obtain a rice bran wax oxidate (O);
iv) stopping the reaction and allowing the reaction mixture obtained in step iii) to stand until the organic phase hs separated from the aqueous phase;
v) separating off the organic phase;
vi) optionally removing residues containing chromium compounds from the organic phase to obtain the rice bran wax oxidate (O) in purified form,
vii) optionally repeating the sequence of steps ii) to vi) up to two times, wherein the rice bran wax oxidate (O), optionally in purified form, is used instead of the rice bran wax (R),
wherein the oxidation in step iii) is performed over a period of 1 to 8 hours, and wherein the weight ratio of the total amount of chromium trioxide used to rice bran wax (R) used is from 5:4 to 9:6.

2. Process according to claim 1, wherein the removal of residues containing chromium compounds is performed in step vi) and comprises washing the organic phase with an aqueous solution of oxalic acid and/or sulfuric acid.

3. Process according to at least one of claims 1 or 2, wherein the removal of residues containing chromium compounds is carried out in step vi) and comprises washing the organic phase with water.

4. Process according to at least one of claims 1 to 3, wherein the removal of residues containing chromium compounds is carried out in step vi) and comprises centrifuging the organic phase.

5. Process according to at least one of claims 1 to 4, wherein the concentration of chromium trioxide in the mixture (M) is from 50 to 200 g/L.

6. Process according to at least one of claims 1 to 5, wherein the oxidation in step iii) is carried out over a period of 2 to 5 hours.

7. Process according to at least one of claims 1 to 6, wherein the stirring speed in step iii) is between 100 and 500 rpm.

8. Process according to at least one of claims 1 to 7, wherein no additional oxidation promoters are added to the reaction mixture.

9. Rice bran wax oxidate (O) having an acid value of greater than 45 mg KOH/g and less than 70 mg KOH/g and a needle penetration number of less than 3 mm⁻¹, prepared by the process according to at least one of claims 1 to 8.

10. Rice bran wax oxidate (O) according to claim 9 with a proportion of polyesters formed from polyhydric alcohols and aliphatic carboxylic acids with 22 to 36 carbon atoms of less than 5% by weight, based on the total weight of the rice bran wax oxidate (O).

11. Rice bran wax oxidate (O) having an acid number of greater than 45 mg KOH/g and less than 70 mg KOH/g, a needle penetration number of less than 3 mm⁻¹and having a proportion of multiple esters formed from polyhydric alcohols and aliphatic carboxylic acids having 22 to 36 carbon atoms of less than 5% by weight, based on the total weight of the rice bran wax oxidate (O).

12. Rice bran wax oxidate (O) according to claim 10 or 11:
a) 10 to 40% by weight, based on the total weight of the rice bran wax oxidate (O), of free aliphatic carboxylic acids having 8 to 36 carbon atoms;
b) 0 to 5 % by weight, based on the total weight of the rice bran wax oxidate (O), of free aliphatic alcohols having 24 to 36 carbon atoms;
c) 0 to 10 % by weight, based on the total weight of the rice bran wax oxidate (O), of free aliphatic dicarboxylic acids having 10 to 30 carbon atoms;
d) from 45 to 90% by weight, based on the total weight of the rice bran wax oxidate (O), of genuine esters having from 42 to 64 carbon atoms; and
e) 0 to 15 % by weight, based on the total weight of the rice bran wax oxidate (O), of other natural constituents contained in the rice bran wax.

13. Rice bran wax oxidate (O) according to at least one of claims 9 to 12, containing at most 10% by weight, based on the total weight of the rice bran wax oxidate (O), of lignoceric acid.

14. Saponified rice bran wax oxidate prepared by saponifying the rice bran wax oxidate (O) according to any one of claims 1 to 13 with a basic metal salt, preferably an alkali metal hydroxide and/or alkaline earth metal hydroxide.

15. Use of the rice bran wax oxidate (O) according to at least one of claims 9 to 13 or of a saponified rice bran wax oxidate (V) according to claim 14 for agricultural or forestry purposes, as an additive in plastics processing, in care products, in printing inks and/or in paints.

## Revendications

1. Procédé de préparation d'oxydes de cire de son de riz (O) ayant un indice d'acide supérieur à 45 mg de KOH/g et inférieur à 70 mg de KOH/g et un indice de pénétration d'aiguille inférieur à 3 mm⁻¹, comprenant les étapes suivantes :
i) fournir une cire de son de riz (R) contenant moins de 5 % en poids, par rapport au poids total de la cire de son de riz (R), de polyesters formés à partir de polyalcools et d'acides carboxyliques aliphatiques ayant de 8 à 20 atomes de carbone;
ii) fournir un mélange (M) de trioxyde de chrome et d'acide sulfurique;
iii) réaliser l'oxydation de la cire de son de riz (R) en faisant réagir la cire de son de riz (R) avec le mélange (M) sous agitation et à une température de 90 à 150 °C pour obtenir un oxydé de cire de son de riz (O);
iv) terminer la réaction et laisser reposer le mélange réactionnel obtenu à l'étape iii) jusqu'à la séparation de la phase organique de la phase aqueuse;
v) séparation de la phase organique ;
vi) éventuellement, élimination des résidus contenant des composés de chrome de la phase organique pour obtenir l'oxyde de cire de son de riz (O) sous forme purifiée,
vii) répétition facultative de la séquence des étapes ii) à vi) jusqu'à deux fois, en utilisant, à la place de la cire de son de riz (R), l'oxyde de cire de son de riz (O), éventuellement sous forme purifiée,
l'oxydation étant réalisée dans l'étape iii) pendant une période de 1 à 8 heures, et
le rapport pondéral du trioxyde de chrome total utilisé à la cire de son de riz (R) utilisée étant de 5:4 à 9:6.

2. Procédé selon la revendication 1, dans lequel l'élimination des résidus contenant des composés de chrome est effectuée dans l'étape vi) et comprend le lavage de la phase organique avec une solution aqueuse d'acide oxalique et/ou d'acide sulfurique.

3. Procédé selon au moins l'une des revendications 1 ou 2, dans lequel l'élimination des résidus contenant des composés de chrome est effectuée à l'étape vi) et comprend le lavage à l'eau de la phase organique.

4. Procédé selon au moins l'une des revendications 1 à 3, dans lequel l'élimination des résidus contenant des composés de chrome est effectuée à l'étape vi) et comprend la centrifugation de la phase organique.

5. Procédé selon au moins l'une des revendications 1 à 4, dans lequel la concentration de trioxyde de chrome dans le mélange (M) est entre 50 et 200 g/L.

6. Procédé selon au moins l'une des revendications 1 à 5, dans lequel l'oxydation de l'étape iii) est réalisée pendant une durée de 2 à 5 heures.

7. Procédé selon au moins l'une des revendications 1 à 6, dans lequel la vitesse d'agitation à l'étape iii) est entre 100 et 500 tours/minute.

8. Procédé selon au moins l'une des revendications 1 à 7, dans lequel aucun promoteur d'oxydation supplémentaire n'est ajouté au mélange réactionnel.

9. Oxyde de cire de son de riz (O) ayant un indice d'acide supérieur à 45 mg KOH/g et inférieur à 70 mg KOH/g et un indice de pénétration d'aiguille inférieur à 3 mm⁻¹, préparé par le procédé selon au moins une des revendications 1 à 8.

10. Oxyde de cire de son de riz (O) selon la revendication 9 avec une proportion de polyesters formés à partir d'alcools polyvalents et d'acides carboxyliques aliphatiques avec 22 à 36 atomes de carbone inférieure à 5 % en poids, par rapport au poids total de l'oxyde de cire de son de riz (O).

11. Oxyde de cire de son de riz (O) ayant un indice d'acide supérieur à 45 mg KOH/g et inférieur à 70 mg KOH/g, un indice de pénétration d'aiguille inférieur à 3 mm⁻¹ et une proportion d'esters multiples formés à partir de polyalcools et de acides carboxyliques aliphatiques ayant de 22 à 36 atomes de carbone inférieure à 5 % en poids, par rapport au poids total de l'oxyde de cire de son de riz (O).

12. Oxyde de cire de son de riz (O) selon la revendication 10 ou 11, contenant :
a) 10 à 40 % en poids, par rapport au poids total de l'oxyde de cire de son de riz (O), d'acides carboxyliques aliphatiques libres ayant 8 à 36 atomes de carbone
b) 0 à 5 % en poids, par rapport au poids total de l'oxyde de cire de son de riz (O), d'alcools aliphatiques libres ayant de 24 à 36 atomes de carbone
c) 0 à 10 % en poids, par rapport au poids total de l'oxyde de cire de son de riz (O), d'acides dicarboxyliques aliphatiques libres ayant de 10 à 30 atomes de carbone ;
d) 45 à 90 % en poids, par rapport au poids total de l'oxyde de cire de son de riz (O), genuine esters ayant 42 à 64 atomes de carbone ; et
e) 0 à 15 % en poids, par rapport au poids total de l'oxydat de cire de son de riz (O), d'autres composants naturels contenus dans la cire de son de riz.

13. Oxyde de cire de son de riz (O) selon au moins l'une des revendications 9 à 12, contenant au plus 10 % en poids, par rapport au poids total de l'oxyde de cire de son de riz (O), d'acide lignocérique.

14. Oxyde de cire de son de riz saponifié préparé par saponification de l'oxyde de cire de son de riz (O) selon l'une quelconque des revendications 1 à 13 avec un sel de métal basique, de préférence un hydroxyde de métal alcalin et/ou un hydroxyde de métal alcalino-terreux.

15. Utilisation de l'oxyde de cire de son de riz (O) selon au moins l'une des revendications 9 à 13 ou d'un oxyde de cire de son de riz saponifié (V) selon la revendication 14 à des fins agricoles ou forestières, comme additif dans la transformation des matières plastiques, dans les produits d'entretien, dans les encres d'imprimerie et/ou dans les vernis.
